# EUROPEAN PATENT SPECIFICATION

(11) **EP 1 523 827 B1**
(45) Date of publication and mention of the grant of the patent: **23.08.2006**
(21) Application number: 02747632.4
(22) Date of filing: 19.07.2002
(51) Int. Cl.: H04L 12/26, H04Q 7/38, H04L 12/56

(54) **INFORMING A LAWFUL INTERCEPTION SYSTEM OF THE SERVING SYSTEM SERVING AN INTERCEPTED TARGET**
INFORMATIONSÜBERMITTLUNG AN EIN GESETZMÄSSIGES ABFANGSYSTEM ÜBER DAS BETREUENDE SYSTEM DES ABFANGZIELS
INFORMATION D'UN SYSTEME D'INTERCEPTION LICITE DU SYSTEME SERVEUR SERVANT UNE CIBLE INTERCEPTEE

(43) Date of publication of application: 20.04.2005
(73) Proprietor: Nokia Corporation, 02150 Espoo (FI)
(72) Inventor: MÄKINEN, Teemu, FIN-04420 Jarvenpää (FI); SANDAS, Ulf, FIN-02600 Espoo (FI); GULBANI, Giorgi, FIN-02600 Espoo (FI)
(74) Representative: TBK-Patent
(86) International application number: PCT/IB2002/002841
(87) International publication number: WO 2004/010649

(56) References cited:
- US-A1- 2002 049 913
- US-A1- 2002 078 384
- "ETSI TS 133 107 V5.3.0 UMTS Lawful Interception Architecture and Functions (3GPP TS 33.107 v5.3.0 Release 5)" [Online] June 2002 (2002-06) XP002230228 Retrieved from the Internet: <URL: http://webapp.etsi.org/action\PU/20020625/ ts_133107v050300p.pdf> [retrieved on 2003-02-06] cited in the application page 1 -page 68

## Description

### Field of the Invention

The present invention relates to a method for informing a lawful interception system of the serving system serving an intercepted target, as well as to a correspondingly adapted serving system node of a serving system.

### Background of the invention

The provision of a lawful interception is a requirement of national law, which is usually mandatory. From time to time, a network operator and/or a service provider will be required, according to a lawful authorization, to make results of interception relating to specific identities (i.e. users and their terminals) available to a specific intercepting authority or Law Enforcement Agency (LEA).

There are various aspects of interception. The respective national law describes under what conditions and with what restrictions interception is allowed. If a LEA wishes to use lawful interception as a tool, it will ask a prosecuting judge or other responsible body for a lawful authorization, such as a warrant. If the lawful authorization is granted, the LEA will present the lawful authorization to an access provider which provides access from a user's terminal to that network, to the network operator, or to the service provider via an administrative interface or procedure. When a lawful interception is authorized, Intercept Related Information (IRI) and/or the content of the corresponding communication (CC) are delivered to the LEA.

The lawful authorization may describe the IRI and the content of the communication (CC) that are allowed to be delivered for this LEA. Typically, the interception period and interception target (e.g., a person's name or MSISDN number(s) related to SIM card(s) or IMEI code of a mobile terminal. For different LEAs and for different investigations, different constraints can apply that further limit the general borders set by the law. The interception target (i.e. the user's SIM card and/or terminal to be intercepted) may also be described in different ways in a lawful authorization, e.g. subscriber address, physical address, location, services etc.

Such a lawful interception functionality is also needed in the packet switched part of new mobile data networks such as the GSM and the UMTS (also known as 2G GPRS and/or 3G GPRS).

Lawful interception is based on an EU Council resolution, which concerns all telecommunications systems, not only mobile ones. Lawful interception has been further subdivided to the lawful interception proper, and to the handover part of the intercepted data to the authorized law enforcement agency's monitoring facility (LEMF). The 3GPP and the European Telecommunications Standards Institute (ETSI) have defined further technical requirements. These requirements define three interfaces for each part of packet data interception and handover:
X1 (=HI1): administrative tasks (HI1 may be on paper or fax or online or otherwise)
X2 (=HI2): IRI delivery (near real time)
X3 (=HI3): intercepted user data (near real time)

The interface X1 carries interception requests. HI1 carries authorization documents, encryption keys and the like. The interface X2 and HI2 carry IRI (Interception Related Information) like phone numbers, service information, time stamps etc. The interface X3 carries the content of communication (CC), i.e., the intercepted packets containing data sent and/or received etc. The exact definitions of the three interfaces are left to local legislation and authorities. The interfaces X1 to X3 are referred in the 3GPP TS 33.107. The three HI interfaces are defined in 3GPP TS 33.108 and in ETSI ES 201 671 V2.1.1 as HI1/HI2/HI3 interfaces.

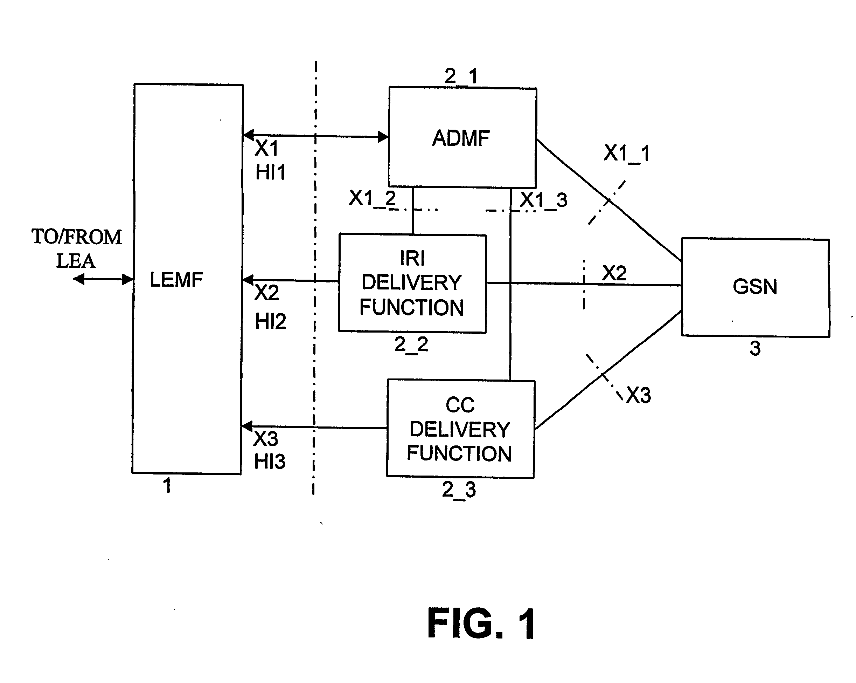

With respect to Fig. 1, the lawful interception is described in more detail. Fig. 1 shows a reference configuration for the lawful interception for GPRS (General Packet Radio Systems). Reference numeral 1 denotes a Law Enforcement Monitoring Facility (LEMF) mentioned above. The symbols X1, X2, X3, HI1 HI2 and HI3 denote the above-mentioned interfaces between the LEMF and respective network elements which are described in the following. Numeral 2_1 denotes an Administrative Function ADMF for LI (Lawful Interception) in the network. Numeral 2_2 indicates an IRI delivery function (also known as DF2/MF2 e.g. for packet data like GPRS), whereas numeral 2_3 indicates a CC delivery function (also known as DF3/MF3 e.g. for packet data). The ADMF 2_1, the IRI delivery function 2_2 and the CC delivery function 2_3 are connected to a GSN (GPRS Support Node) 3 via interfaces X1_1, X2 and X3, respectively. In addition, the IRI and CC delivery functions are connected with the ADMF 2_1 via interfaces X1_2 and X1_3, respectively. The GSN 3 can be an SGSN or a GGSN or other node intercepting user activity or frames containing user level packet data.

In this manner, the ADMF 2_1 is used together with the delivery functions to hide from the GSN that there might be multiple activations by different Law Enforcement Agencies (LEAs) on the same target. Additionally, the packet network complexity is hidden from the LEA(s).

In case of a packet switched services, the IRI and CC data are transmitted in packets to the LEMF 1. The packet flow starts from the packet intercepting node (i.e. GSN 3 in Fig. 1) to the delivery function nodes (i.e., IRI and CC delivery functions 2_2 and 2_3 in Fig. 1) to the LEMF 1. The LEMF system has a mass memory for packets, but it may also monitor packets as near real time streams. In GPRS, for example, the IRI data is defined to have some network attachment and/or PDP (Packet Data Protocol) context related data incorporated that relates the IRI to certain subscriber activity. The packets thus relate to a certain PDP context as an example of a network attachment and/or an active communication context (while only the context need to be active, not necessarily the communication need to be active in the sense of "ongoing").

Thus, lawful interception is a topic, which mainly concerns core networks of communication networks, in particular, of (2G and/or 3G) packet switched communication networks.

According to recent tendencies in communication network evolution, communication networks are adopted to interact with each other in a compatible manner. This means that communication networks operated by different operators interact with each other as well as communication networks in different countries (having a respective different jurisdiction) interact with other. For the purpose of the present invention, a communication network operated by a specific operator is also referred to as a serving system serving an intercepted target MS roaming within the communication network system. The communication network system comprises at least one serving system, and each serving system in turn comprises at least one serving system node serving the intercepted target for communication. In case of GPRS (General Packet Radio Service) as an example of packet switched communication network and/or serving system, serving system nodes can be exemplified as SGSN (Serving GPRS Support Node) or GGSN (Gateway GPRS Support Node). Interception of a target can take place already at an SGSN or at the GGSN. Also, according to agreed serving system architecture, the SGSNs of a serving system are connected to the GGSN thereof.

Thus, a user traveling with his terminal such as a mobile station MS and/or a user equipment UE within such a communication network system, and being a target for lawful interception, is roaming within different networks and may even move out of the given warrant's (court order) jurisdiction.

Such circumstances have led to a requirement in lawful interception standardization that a home lawful interception LI system should know where the target (intercepted mobile) is roaming. Currently, if Operator A's subscriber (as a target for lawful interception) is moving from operator A's serving system node such as an SGSN ("old SGSN") to operator B's serving system node such as an SGSN ("new SGSN"), operator A's GPRS network does not have sufficient information about the network/serving system the target terminal is moving to. Currently, only the SGSN's Internet Protocol (IP) address is transferred from the new SGSN to the old SGSN in an SGSN Context Request, but the IP address does not identify the country and the operator network and/or serving system where the new SGSN is located. This information on where the target has moved to resides in the HLR but currently LI system is always connected to the SGSN and/or to the GGSN, never to HLR.

In order to solve these difficulties, solutions for future networks (Rel5 UMTS) have been agreed upon in communication networks standardization by 3GPP (3^{rd} Generation partnership Project). These solutions are for example described in 3GPP TS 33.108 V5.0.0 (2002-06) and 3GPP TS 33.107 V5.3.0 (2002-06).

With these solutions, a requirement for the HLR (Home Location Register, as used in 2G) and/or HSS (Home Subscriber Server, as used in 3G) was introduced in that the HLR has to report to the DF/MF (Delivery Function / Mediation Function) the whereabouts of the new serving system serving node (SGSN) once an interception target is trying to attach thereto, or when the target is trying to change the serving operator's serving node to the new operator's serving node (for example in a inter SGSN inter PLNM RAU -Routing Area Update). This is relevant once the target moves to an area and/or a serving system, which is out of the given LEA's or warrant's jurisdiction. However, this reporting by the HLR requires from the HLR certain actions even if the target stays under the LEA's or warrant's jurisdiction. Therefore, this current solution imposes a rather heavy overload on a HLR in terms of processing required as well as communication traffic over interfaces within the core network. While, without such additional efforts, the lawful interception system does not know where the target is if the subscriber moves/changes to another PLMN (Public Land Mobile Network).

Further prior art is known from an interception method and system as disclosed for example in document US 2002/0078384 A1.

Also, document US 2002/0049913 A1 discloses a prior art interception system and method.

### Summary of the invention

Consequently, it is an object of the present invention to provide an improved method for informing a lawful interception system of the serving system serving an intercepted target, as well as to a correspondingly adapted serving system node of a serving system.

According to the present invention, the above object is for example achieved by a method for informing a lawful interception system of the serving system serving an intercepted target roaming within a communication network system as defined in claim 1.

Favorable further developments of the method are as set out in the respective dependent claims.

Also, according to the present invention, the above object is for example achieved by a serving system node of a serving system, the serving system node being adapted to serve an intercepted target for communication, and being connectable to a lawful interception system, and the serving system node being defined in claim 8.

Favorable further developments of the serving system node are as set out in the respective dependent claims.

By virtue of the present invention, which, briefly stated, proposes that the old serving system node (SGSN and/or GGSN) report the address of the new serving system (and/or whereabouts of the new serving system) to the lawful interception system, basically the following advantages can be achieved:
- the previously known solution is improved,
- it is easy to be implemented to 2G as well as 3G serving system nodes such as SGSN and/or GGSN,
- the lawful interception system (already at the lawful interception gateway which may be a SGSN / GGSN) has the knowledge where the subscriber is (location and/or at least serving system (i.e. knowledge which operator runs the serving system serving the target); thus, the old serving system node (e.g. "old SGSN") and consequently delivery / mediation function get immediately the knowledge where the subscriber is moving to, as this information can be critical in case the new serving system node ("new SGSN") is out of the LEA's jurisdiction,
- the HLR or other comparable databases/registers or servers such as HSS need no longer be involved in fetching the necessary information indicating where the intercepted subscriber (target) is or is moving to,
- this, in turn, leads to the present invention defining a more efficient solution as no additional signaling with / processing by the HLR / HSS is required due to the fact that once a first (serving system node change request) or second detection (of an active communication context) is successful, the old serving system node (SGSN /GGSN) informs the LEA of the new serving system node's address information.

### Brief description of the drawings

In the following, the present invention will be described in greater detail with reference to the accompanying drawings, in which
Fig. 1 shows a reference configuration for the lawful interception for GPRS (General Packet Radio Systems) as an example of a packet switched communication network and/or serving system; and
Fig. 2 shows a signaling scenario for an Inter SGSN Routing Area Update as known from 3GPP TS 23.060 used for explaining the present invention.
Fig. 3 shows a signaling scenario for an Attach Procedure as known from 3GPP TS 23.060 used for explaining the present invention.

### Detailed description of the embodiments

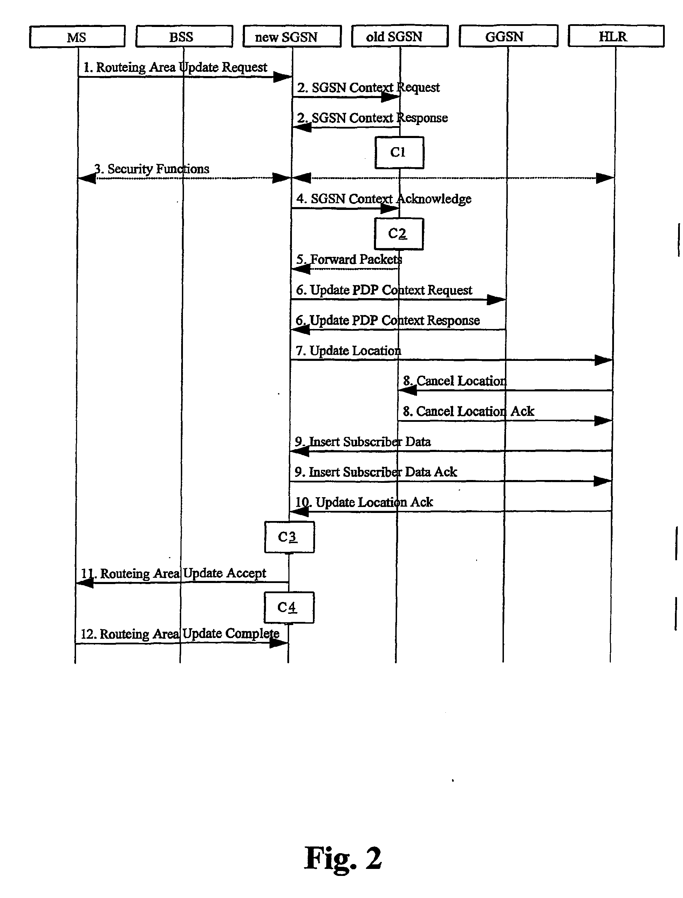

For better understanding of the preset invention, it should be noted that the GSN as an example of a serving system node may be a SGSN or a GGSN in case of GPRS. Thus, the lawful interception system is connected to SGSN or GGSN as a serving system node, dependent on where the interception is performed. SGSN and GGSN are connected to each other and mutually exchange information, as required, via a connection element generally known as Gn interface. The lawful interception system "beyond" the serving system node SGSN/GGSN shown in Fig. 1 is omitted from the illustration in Fig. 2 in order to keep the drawing simple.

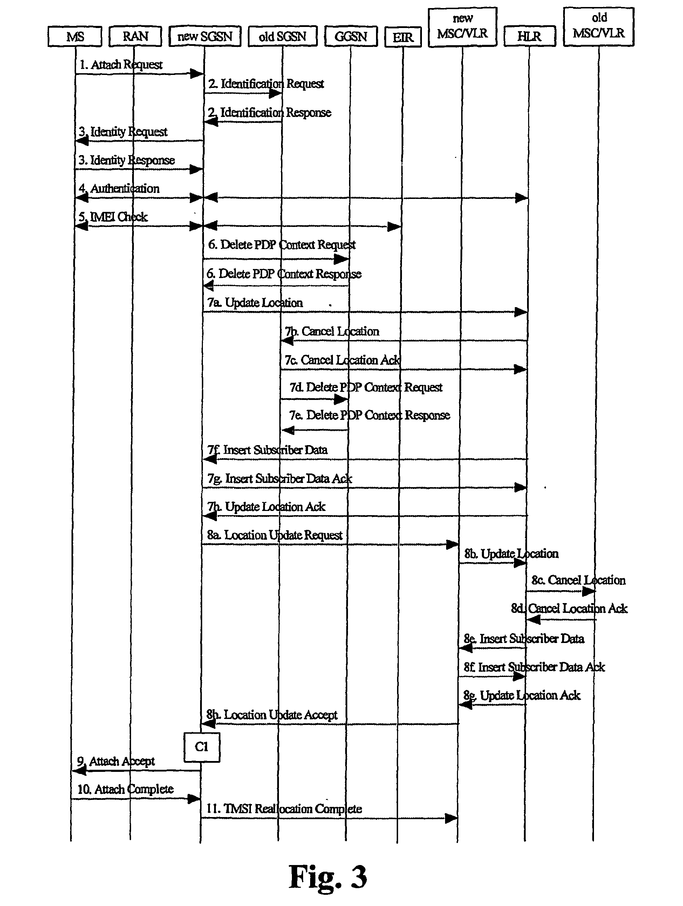

Fig. 2 is described in detail in 3GPP TS 23.060, so that a detailed description thereof is omitted. It is to be noted that the boxes labeled C1 to C4 define CAMEL action points which are not related to the present invention. The present invention, when referring to the signaling shown in Fig. 2, affects steps 2. and/or 6., i.e. the SGSN Context Request and the Update PDP Context Request as respective examples in connection with GPRS as a serving system. When referring to the signaling shown in Fig. 3, the present invention affects step 2., i.e. the Identification Request, as explained later on.

Subsequently, the present invention will be set out in greater detail.

As is commonly agreed, the blocks in Figs. 2 and 3 arranged in horizontal direction indicate network entities and/or terminals involved in the signaling, whereas the arrows there between in horizontal direction represent the signaling. The time relation within the signaling is reflected by the numbering of the arrows as well as by the vertical arrangement of these.

MS denotes a mobile station and/or user equipment (UE) as a target to bee intercepted. The target accesses a serving system such as the GPRS network via a base station subsystem BSS representing an access network. The serving system comprises at least one serving system node such as a SGSN and/or GGSN. As shown in Fig. 2, there is an "new" and an "old" SGSN. "New" means that the target has moved/roamed to an area in which the new serving system node is determined to be in charge of serving the target. "Old" means that the old SGSN has formerly been or is currently still in charge of serving the target (until the new one has fully taken over serving of the target). The "new" and the "old" serving system node can be nodes of different serving systems which may be in different countries and/or operated by different operators.

The present invention conceives a method for informing a lawful interception system (not shown in Fig. 2) of the serving system serving an intercepted target MS roaming within a communication network system. The information related to the serving system is referred to as serving system address. The communication network system comprises at least one serving system, each serving system comprising at least one serving system node serving the intercepted target for communication.

With reference to Fig. 2, assuming that the old and new SGSN are operated by the same operator, there is shown one serving system having two serving system nodes illustrated. Whereas in case that it is assumed that the old and the new SGSN represent serving system nodes operated by different operators and/or in different countries, there is shown a situation with two serving systems each having one serving system node illustrated; the old SGSN could reside in the home network of the target subscriber, whereas the new SGSN would reside in a visited network to which the target has roamed.

When roaming to an area in which a new serving system node is determined to be in charge for serving the target, the target issues a serving system node change request (step 1.). In case of GPRS being the basis of a serving system, such a serving system node change request is referred to as Routing Area Update RAU request. This request is communicated to the new serving system node. The serving system node then performs a first detecting of this serving system node change request received from the intercepted target MS and communicated to the new serving system node which is currently not serving the target. The thus detected serving system node change request is subjected, at the new serving system node currently not serving the target, to a first processing (not shown in Fig. 2). The processing comprises the inclusion, to the (detected and received) request, of a serving system address of the new serving system node currently not serving the target. Then, there is performed a first forwarding of said processed request (step 2.) to the old serving system node currently (still) serving the target. This old serving system node currently serving the target subsequently informs the interception system (not shown) of the serving system address of the new serving system node. Stated in other words, in case of the lawful interception system being connected to the SGSN, the (old) SGSN informs the LEA directly. In case the lawful interception system is connected to the GGSN, the SGSN transfers the information to the GGSN which in turn transmits it to the LEA.

Furthermore, the new serving system node, to which the target roams, performs a second detecting of whether there is at least one active communication context for said target (such as for example a PDP context active). If so, the node generates a communication context update request (e.g. an Update PDP Context Request) to which request is included the serving system address of the new serving system node currently not serving the target. Subsequently, a second forwarding of said generated request (step 6.) to a gateway serving system node (e.g. GGSN) of the serving system currently serving the intercepted target is performed.

Then, said gateway serving system node (e.g. GGSN) informs the interception system (and/or in the end the LEA) of the serving system address of the new serving system node. That is, in case of the lawful interception system being connected to the GGSN, the GGSN informs the LEA directly. In case the lawful interception system is connected to the SGSN, the GGSN transfers the information to the old SGSN which in turn transmits it to the LEA.

The serving system address of the new serving system node represents information indicative of the serving system to which said new serving node belongs. Any such information can be used for this purpose as long as it is sufficient to distinguish the serving system nodes as well as the location / serving system to which they belong from each other. Hence, the information about the serving system to which said new serving node belongs comprises, for example in case of GPRS serving systems, at least one of the following information items: serving node MSISDN number, serving node Routing Area Identifier RAI, serving node address. In other serving systems, the information element (IE) may be referred to by other names.

The above mentioned serving node routing area identifier in turn contains information items representative of a mobile country code MCC, mobile network code MNC, location area code LAC, and routing area code RAC, thereby uniquely defining the node as such as well as its location within the network system and in particular the network / serving system to which it belongs.

Herein before, the present invention has been described with a focus on the method according to the present invention. Nevertheless, the present invention concerns also a correspondingly adapted serving system node of a serving system, the serving system node being adapted to serve an intercepted target MS for communication, and being connectable to a lawful interception system. As will be readily understood by those skilled in the art from the foregoing description of the method, such a serving system node comprises first detection means adapted for performing a first detecting of a serving system node change request from the intercepted target MS, a first processing means adapted for performing a first processing of said serving system node change request, wherein said processing is adapted to include, to the request, a serving system address of the serving system node, and also comprises a first forwarding means adapted for performing a first forwarding of said processed request to another serving system node currently serving the target.

Also, a corresponding serving system node comprises an informing means adapted to inform the lawful interception system of the serving system address of a new serving system node, said informing means being active in case said serving system node is currently serving the target. The node may inform the lawful interception system and/or the LEA directly in case the interception system is connected to the node (e.g. node is SGSN or GGSN and lawful interception is connected to SGSN or GGSN, respectively). Alternatively, also indirect informing can take place (e.g. in case the node is SGSN and lawful interception system is connected to GGSN).

Furthermore, the proposed serving system node according to the present invention comprised a second detection means adapted for performing a second detecting of at least one active communication context for said target, and has a generation means, controlled by said second detection means, and adapted for generating a communication context update request to which is included the serving system address of the serving system node. Also, a second forwarding means is provided which is adapted for second forwarding said generated request to a gateway serving system node (GGSN) of the serving system currently serving the intercepted target. So, referring to the example shown in Fig. 2, the new SGSN forwards the Update PDP Context Request either to the GGSN of its own serving system in case the new SGSN belongs to the same serving system as the old SGSN, or forwards the Update PDP Context Request to the GGSN of the old serving system (currently serving the target) in case the new SGSN does not belong to the same serving system as the old SGSN but to another one (e.g. in another country and/or operated by another operator).

Similarly as in connection with the above described method, also in connection with the serving system node according to the present invention, said serving system address of the serving system node represents information about the serving system to which said new serving node belongs. Said information about the serving system to which said serving node belongs comprises at least one of the following information items: serving node MSISDN number, serving node routing area identifier, serving node address, and said serving node routing area identifier contains information items representative of a mobile country code MCC, mobile network code MNC, location area code LAC, and routing area code RAC.

Thus, as will be appreciated from the foregoing description, with this invention, (when adhering to the chosen example of GPRS as a basis of a packet switched communication network and/or serving system), a new information element IE is added to the SGSN Context Request that identifies the network where the new SGSN is located. This information will be the E.164 (MSISDN) number of the SGSN, which includes information about the country and network, and/or a Routing Area Identity (RAI). This information is specified in 3GPP TS 23.003 and it is available in all SGSN's. (Both the MSISDN number in E.164 format and RAI are already defined in the ASN.1 object tree, given in 3GPP TS 33.108.)

This invention thus proposes that the old SGSN shall use for the purpose of lawful interception the new SGSN's RAI, once the old SGSN gets this information element with the 'Identification Request' message / SGSN context request message. The new SGSN sends the message once the MS / UE tries to attach to it.

Stated in other words, the detected serving system node change request may not only be a routing area update RAU request as shown in Fig. 2, but may also be an Attach Request as shown in Fig. 3 (taken also from 3GPP TS 23.060), which is subsequently processed as described above in connection with the RAU request (thus yielding an Identification Request modified according to the processing according to the present invention applied to the Attach Request).

After the old SGSN gets the new SGSN's MSISDN number and/or RAI, the lawful interception (LI) system can get it from the old SGSN (directly or via the GGSN) and LEA then gets the information (IRI data) about where the target is located.

In case user to be intercepted has at least one active PDP context, the new SGSN generates and sends an Update PDP Context Request to GGSN. The invention proposes to add the above mentioned new information element into that message as well. In this way, the LI system attached to GGSN can identify instances when user changes PLMN.(GGSN may report also to SGSN which then informs LI system).

As the protocol used between SGSN's, it is to be noted that GTP (GPRS Tunneling Protocol) specified in 3GPP TS 29.060 is used.

According to the invention, the information element is obtained once the target moves to an area of a new serving system node (i.e. new SGSN), from which LEA is for example not entitled to get any interception for this target. Therefore, it is proposed to pass the Routing Area Identifier RAI, which contains Mobile Country Code MCC, Mobile Network Code MNC, Location Area Code LAC and Routing Area Code RAC of the new SGSN, once the new SGSN is asking the old one to send the SGSN contexts. (Nevertheless, the proposed signaling also takes place if the target moves to a new serving node SGSN from which LEA is still entitled to get interception.)

In such a way, the old SGSN will come to know itself, and tell the LEA, that the target has moved out of the given warrant's (court order) jurisdiction. Besides, the RAI shall tell the LEA in which country and from which operator the target gets the services after the RAU.

Apparently, the above mentioned does not require any involvement of the HLR / HSS, so that there are no extra signaling tasks to perform. Protecting HLR resources is the effectively achieved by the invention, while easily finding out the location (country and more specific coordinates) and network (i.e. which visited network the target is using/attached to) to which the target is roaming.

The present invention thus addresses the three following sub procedures within the two procedures (Attach and Routing Area Update Procedure, respectively):
- SGSN Context Request/Response/Acknowledge (within the inter SGSN RAU procedure),
- Update PDP Context Request/Response (within the inter SGSN RAU procedure), and
- Identification Request/Response (within the Attach procedure).

Accordingly, as has been described herein above, the present invention proposes a method for informing a lawful interception system of the serving system serving an intercepted target MS roaming within a communication network system, the communication network system comprising at least one serving system each serving system comprising at least one serving system node SGSN serving the intercepted target for communication, the method comprising the steps of: first detecting a serving system node change request 1 from the intercepted target MS towards a new serving system node which is currently not serving the target, first processing said serving system node change request at said new serving system node currently not serving the target, wherein said processing comprises the inclusion, to the request, of a serving system address of the new serving system node currently not serving the target, and first forwarding said processed request 2 to an old serving system node currently serving the target. Also, the present invention proposes a serving system node adapted to be used in such a method.

Thus, from the foregoing description of the present invention, it will become clear that having regard to the previous solutions as outlined above with reference to 3GPP TS 33.108 V5.0.0 (2002-06) and 3GPP TS 33.107 V5.3.0 (2002-06), the present invention will lead to the changes to these agreed solutions as follows:
(note that numberings refer to the numbering of section in the respective technical specification TS)

### A) As to 3GPP TS 33.108 V5.0.0 (2002-06):

### 6.5 IRI for packet domain

Intercept related information will in principle be available in the following phases of a data transmission:
1. At connection attempt when the target identity becomes active, at which time packet transmission may or may not occur (set up of a data context, target may be the originating or terminating party);
2. At the end of a connection, when the target identity becomes inactive (removal of a data context);
3. At certain times when relevant information are available.

In addition, information on non-transmission related actions of a target constitute IRI and is sent via HI2, e.g. information on subscriber controlled input. The intercept related information (IRI) may be subdivided into the following categories:
1. Control information for HI2 (e.g. correlation information);
2. Basic data context information, for standard data transmission between two parties.

The events defined in ref [11] are used to generate records for the delivery via HI2.

There are eight different event types received at DF2 level. According to each event, a Record is sent to the LEMF if this is required. The following table gives the mapping between event type received at DF2 level and record type sent to the LEMF.

**Table 6.1: Mapping between UMTS Data Events and HI2 records type**

| **Event** | **R Record Type** |
|---|---|
| **GPRS attach** | **REPORT** |
| **GPRS detach** | **REPORT** |
| **PDP context activation (successful)** | **BEGIN** |
| **PDP context modification** | **CONTINUE** |
| **PDP context activation (unsuccessful)** | **REPORT** |
| **Start of intercept with PDP context active** | **BEGIN** |
| **PDP context deactivation** | **END** |
| **Location update** | **REPORT** |
| **SMS** | **REPORT** |
| **Serving,System** | **REPORT** |

A set of information is used to generate the records. The records used transmit the information from mediation function to LEMF. This set of information can be extended in the GSN or DF2 MF, if this is necessary in a specific country. The following table gives the mapping between information received per event and information sent in records.

**Table 6.2: Mapping between Events information and IRI information**

| **parameter** | **description** | **HI2 ASN1 parameter** |
|---|---|---|
| **observed MSISDN** | **Target Identifier with the MSISDN of the target subscriber (monitored subscriber).** | **partyInformation (party-identiity)** |
| **observed IMSI** | **Target Identifier with the IMSI of the target subscriber (monitored subscriber).** | **partyInformation (party-identity)** |
| **observed IMEI** | **Target Identifier with the IMEI of the target subscriber (monitored subscriber)** | **partyInformation (party-identity)** |
| **observed PDP address** | **PDP address used by the target..** | **partyInformation (services-data-information)** |
| **event type** | **Description which type of event is delivered: PDP Context Activation, PDP Context Deactivation,GPRS Attach, etc.** | **gPRSevent** |
| **event date** | **Date of the event generation in the xGSN** | **timeStamp** |
| **event time** | **Time of the event generation in the xGSN** | |
| **access point name** | **The APN of the access point** | **partylnformation (services-data-information)** |
| **PDP type** | **This field describes the PDP type as defined in TS GSM 09.60, TS GSM 04.08, TS GSM 09.02** | **partylnformation (services-data-information)** |
| **initiator** | **This field indicates whether the PDP context activation, deactivation, or modification is MS directed or network initiated.** | **initiator** |
| **correlation number** | **Unique number for each PDP context delivered to the LEMF, to help the LEA, to have a correlation between each PDP Context and the IRI.** | **gPRSCorrelationNumber** |
| **lawful interception identifier** | **Unique number for each lawful authorization.** | **lawfullnterceptionldentifier** |
| **location information** | **This field provides the service area identity, RAI and/or location area identity that is present at the SGSN at the time of event record production.** | **locationOfTheTarget** |
| **SMS** | **The SMS content with header which is sent with the SMS-service** | **sMS** |
| **failed context activation reason** | **This field gives information about the reason for a failed context activation of the target subscriber.** | **gPRSOperationErrorCode** |
| **failed attach reason** | **This field gives information about the reason for a failed attach attempt of the target subscriber.** | **gPRSOperationErrorCode** |
| **service center address** | **This field identifies the address of the relevant server within the calling (if server is originating) or called (if server is terminating) party address parameters for SMS-MO or SMS-MT.** | **serviceCenterAddress** |
| **umts QOS** | **This field indicates the Quality of Service associated with the PDP Context procedure.** | **qOS** |
| **context deactivation reason** | **This field gives information about the reason for context deactivation of the target subscriber.** | **gPRSOperationErrorCode** |
| **network identifier** | **Operator ID plus SGSN or GGSN address.** | **networkIdentifier** |
| **iP assignment** | **Observed PDP address is statically or dynamically assigned.** | **iP-assignment** |
| **SMS originating address** | **Identifies the originator of the SMS message.** | **DataNodeAddress** |
| **SMS terminating address** | **Identifies the intended recipient of the SMS message.** | **DataNodeAddress** |
| **SMS initiator** | **Indicates whether the SMS is MO, MT, or Undefined** | **sms-initiator** |
| **serving SGSN number** | **An E.164 number of the serving SGSN.** | **ServingSGSN-Number** |
| **serving SGSN address** | **An IP address of the serving SGSN.** | **ServingSGSN-Address** |
| **serving SGSN RAI** | **Routing Area Identity of the new SGSN** | **Rai (servingSGSN-RAI)** |

| | | |
|---|---|---|
| **NOTE: UID parameter must be present in each record sent to the LEMF.** | | |

### 6.5.1 Events and information

This clause describes the information sent from the Delivery Function (DF) to the Law Enforcement Monitoring Facility (LEMF) to support Lawfully Authorized Electronic Surveillance (LAES). The information is described as records and information carried by a record. This focus is on describing the information being transferred to the LEMF.

The IRI events and data are encoded into records as defined in the Table 6-1 Mapping between GPRS Events and HI2 records type and Annex B.3 Intercept related information (HI2) [1]. IRI is described in terms of a 'causing event' and information associated with that event. Within each IRI Record there is a set of events and associated information elements to support the particular service.

The communication events described in Table 6-1: Mapping between GPRS Events and HI2 record type and Table 6-2: Mapping between Events information and IRI information convey the basic information for reporting the disposition of a communication. This clause describes those events and supporting information.

Each record described in this clause consists of a set of parameters. Each parameter is either:
mandatory (M) - required for the record,
conditional (C) - required in situations where a condition is met (the condition is given in the Description), or
optional (O) - provided at the discretion of the implementation.

The information to be carried by each parameter is identified. Both optional and conditional parameters are considered to be OPTIONAL syntactically in ASN.1 Stage 3 descriptions. The Stage 2 inclusion takes precedence over Stage 3 syntax.

### 6.5.1.1 REPORT record information

The REPORT record is used to report non-communication related subscriber actions (events) and for reporting unsuccessful packet-mode communication attempts.

The REPORT record shall be triggered when:
- the intercept subject's mobile station performs a GPRS attach procedure (successful or unsuccessful);
- the intercept subject's mobile station performs a GPRS detach procedure;
- the intercept subject's mobile station is unsuccessful at performing a PDP context activation procedure;
- the intercept subject's mobile station performs a cell, routing area, or combined cell and routing area update. The new SGSN always reports the event, if applicable. The old SGSN should report the event;
the intercept subject's mobile station sends an SMS-Mobile Originated (MO) communication. Dependent on national requirements, the triggering event shall occur either when the 3G SGSN receives the SMS from the target MS or, when the 3G SGSN receives notification that the SMS-Centre successfully received the SMS;
for GSM and UMTS systems deployed in the U.S., a REPORT record shall be triggered when the 3G SGSN receives an SMS-MO communication from the intercept subject's mobile station;
- the intercept subject's mobile station receives a SMS Mobile-Terminated (MT) communication. Dependent on national requirements, the triggering event shall occur either when the 3G SGSN receives the SMS from the SMS-Centre or, when the 3G SGSN receives notification that the target MS successfully received the SMS;
for GSM and UMTS systems deployed in the U.S., a REPORT record shall be triggered when the 3G SGSN receives an SMS-MT communication from the SMS-Centre destined for the intercept subject's mobile station;
- as a national option, a mobile terminal is authorized for service with another network operator or service provider.

**Table 6.3: GPRS Attach REPORT Record**

| **Parameter** | **MOC** | **Description/Conditons** |
|---|---|---|
| o**bserved MSISDN** | | |
| **observed IMSI** | **C** | **Provide at least one and others when available.** |
| **observed IMEI** | | |
| **event type** | **C** | **Provide GPRS Attach event type.** |
| **event date** | **M** | **Provide the date and time the event is detected.** |
| **event time** | | |
| **network identifier** | **M** | **Shall be provided.** |
| **lawful intercept identifier** | **M** | **Shall be provided.** |
| **location information** | **C** | **Provide, when authorized, to identify location information for the intercept subject's MS.** |
| **failed attach reason** | **C** | **Provide information about the reason for failed attach attempts of the target subscriber.** |
| **serving SGSN RAI** | **C** | **Provided only by the old SGSN, when the alternative serving system reporting is supported, and if the new SGSN sends the Identification Request to it.** |

**Table 6.4: GPRS Detach REPORT Record**

| **Parameter** | **MOC** | **Description/Conditions** |
|---|---|---|
| **observed MSISDN** | | |
| **observed IMSI** | **C** | **Provide at least one and others when available.** |
| **observed IMEI** | | |
| **event type** | **C** | **Provide GPRS Detach event type.** |
| **event date** | **M** | **Provide the date and time the event is detected.** |
| **event time** | | |
| **network identifier** | **M** | **Shall be provided.** |
| **lawful intercept identifier** | **M** | **Shall be provided.** |
| **location information** | **C** | **Provide, when authorized, to identify location information for the intercept subject's MS.** |

**Table 6.5: PDP Context Activation (unsuccessful) REPORT Record**

| **Parameter** | **MOC** | **Description/Conditions** |
|---|---|---|
| **observed MSISDN** | | |
| **observed IMSI** | **C** | **Provide at least one and others when available.** |
| **observed IMEI** | | |
| **observed PDP address** | **C** | **Provide to identify either the:** |
| | | **- static address requested by the intercept subject's MS in association with a subject-initiated PDP context activation request for unsuccessful PDP context activation requests; or** |
| | | **- address offered by the network in association with a network-initiated PDP context activation request when the intercept subject's MS rejects the network-initiated PDP context activation.** |
| **iP assignment** | **C** | **Provide to indicate observed PDP address is statically or dynamically assigned.** |
| **event type** | **C** | **Provide PDP Context Activation event type.** |
| **event date** | **M** | **Provide the date and time the event is detected.** |
| **event time** | | |
| **access point name** | **C** | **Provide to identify either the:** |
| | | **- packet data network to which the intercept subject requested to be connected when the intercept subject's mobile station is unsuccessful at performing a PDP context activation procedure (MS to Network); or** |
| | | **- access point of the packet data network that requested to be connected to the MS when the intercept subject's mobile station rejects a network-initiated PDP context activation (Network to MS).** |
| **PDP type** | **C** | **Provide to describe the PDP type of the observed PDP address. The PDP Type defines the end user protocol to be used between the external packet data network and the MS.** |
| **initiator** | **C** | **Provide to indicate whether the PDP context activation is network-initiated, intercept-subject-initiated, or not available.** |
| **network identifier** | **M** | **Shall be provided.** |
| **lawful intercept identifier** | **M** | **Shall be provided.** |
| **location information** | **C** | **Provide, when authorized, to identify location information for the intercept subject's MS.** |
| **failed context activation reason** | **C** | **Provide information about the reason for failed context activation attempts of the target subscriber.** |
| **QOS** | **C** | **Provide to identify the QOS parameters.** |

**Table 6.6: Location Information Update (with No PDP Context Active) REPORT Record**

| **Parameter** | **MOC** | **Description/Conditions** |
|---|---|---|
| **observed MSISDN** | | |
| **observed IMSI** | **C** | **Provide at least one and others when available.** |
| **observed IMEI** | | |
| **event type** | **C** | **Provide Location information Update event type.** |
| **event date** | **M** | **Provide the date and time the event is detected.** |
| **event time** | | |
| **network identifier** | **M** | **Shall be provided.** |
| **lawful intercept identifier** | **M** | **Shall be provided.** |
| **location information** | **C** | **Provide, when authorized, to identify location information for the intercept subject's MS.** |
| **serving SGSN RAI** | **C** | **Provided only by the old SGSN, when the alternative serving system reporting is supported, and if the new SGSN sends the Identification Request to it.** |
| **serving SGSN number** | **C** | **Provided only by the old SGSN, when the alternative serving system reporting is supported, and if the new SGSN sends the Identification Request to it.** |

**Table 6.7: SMS-MO and SMS-MT Communication REPORT Record**

| **Parameter** | **MOC** | **Description/Conditions** |
|---|---|---|
| **observed MSISDN** | | |
| **observed IMSI** | **C** | **Provide at least one and others when available.** |
| **observed IMEI** | | |
| **event type** | **C** | **Provide SMS event type.** |
| **event date** | **M** | **Provide the date and time the event is detected.** |
| **event time** | | |
| **network identifier** | **M** | **Shall be provided.** |
| **lawful intercept identifier** | **M** | **Shall be provided.** |
| **SMS originating address** | **O** | **Provide to identify the originating and destination address of the SMS message** |
| **SMS destination address** | | |
| **location information** | **C** | **Provide, when authorized, to identify location information for the intercept subject's MS.** |
| **SMS** | **C** | **Provide to deliver SMS content, including header which is sent with the SMS-service.** |
| **service center address** | **C** | **Provide to identify the address of the relevant SMS-C server. If SMS content is provided, this parameter is optional.** |
| **SMS initiator** | **M** | **Indicates whether the SMS is MO, MT, or Undefined.** |

**Table 6.8: Serving System REPORT Record**

| **Parameter** | **MOC** | **Description/Conditions** |
|---|---|---|
| **observed MSISDN** | | |
| **observed IMSI** | **C** | **Provide at least one and others when available.** |
| | | |
| **event type** | **C** | **Provide Serving System event type.** |
| **event date** | **M** | **Provide the date and time the event is detected.** |
| **event time** | | |
| **network identifier** | **M** | **Network identifier of the HLR reporting the event** |
| **lawful intercept identifier** | **M** | **Shall be provided.** |
| **ServingSGSN-Number** | **C** | **Provide to identify the E.164 number of the serving SGSN.** |
| **ServingSGSN-Address** | **C** | **Provide to identify the IP address of the serving SG**SN. |

### 6.5.1.2 BEGIN record information

The BEGIN record is used to convey the first event of packet-data communication interception.

The BEGIN record shall be triggered when:
- successful PDP context activation;
- the interception of a subject's communications is started and at least one PDP context is active. If more than one PDP context is active, a BEGIN record shall be generated for each PDP context that is active.

**Table 6.9: PDP Context Activation (successful) BEGIN Record**

| **Parameter** | **MOC** | **Description/Conditions** |
|---|---|---|
| **observed MSISDN** | | |
| **observed IMSI** | **C** | **Provide at least one and others when available.** |
| **observed IMEI** | | |
| **observed PDP address** | **C** | **Provide to identify one of the following:** |
| | | **- static address requested by the intercept subject's MS, and allocated by the Network for a successful PDP context activation;** |
| | | **- address allocated dynamically by the network to the intercept subject MS in association with a PDP context activation (i.e., address is sent by the Network in an Activate PDP Context Accept) for a successful PDP context activation procedure when the PDP Context activation request does not contain a static PDP address; or** |
| | | **- address offered by the network in association with a network-initiated PDP context activation request when the intercept subject's MS accepts the network-initiated PDP context activation request.** |
| **iP assignment** | **C** | **Provide to indicate observed PDP address is statically or dynamically assigned.** |
| **event type** | **C** | **Provide PDP Context-Activation event type.** |
| **event date** | **M** | **Provide the date and time the event is detected.** |
| **event time** | | |
| **access point name** | **C** | **Provide to identify the:** |
| | | **- packet data network to which the intercept subject requested to be connected when the intercept subject's MS is successful at performing a PDP context activation procedure (MS to Network).** |
| | | **- access point of the packet data network that requested to be connected to the MS when the intercept subject's MS accepts a network-initiated PDP context activation (Network to MS).** |
| **PDP type** | **C** | **Provide to describe the PDP type of the observed PDP address. The PDP Type defines the end user protocol to be used between the external packet data network and the MS.** |
| **initiator** | **C** | **Provide to indicate whether the PDP context activation is network-initiated, intercept-subject-initiated, or not available.** |
| **network identifier** | **M** | **Shall be provided.** |
| **correlation number** | **C** | **Provide to uniquely identify the PDP context delivered to the LEMF and to correlate IRI records with CC.** |
| **lawful intercept identifier** | **M** | **Shall be provided.** |
| **location information** | **C** | **Provide, when authorized, to identify location information for the intercept subject's MS.** |
| **QOS** | **C** | **Provide to identify the QOS parameters.** |

**Table 6.10: Start Of Interception (with PDP Context Active) BEGIN Record**

| **Parameter** | **MOC** | **Description/Conditions** |
|---|---|---|
| **observed MSISDN** | | |
| **observed IMSI** | **C** | **Provide at least one and others when available.** |
| **observed IMEI** | | |
| **observed PDP address** | **C** | **Provide to identify the:** |
| | | **- static address requested by the intercept subject's MS, and allocated by the Network for a successful PDP context activation.** |
| | | **- address allocated dynamically by the network to the intercept subject MS in association with a PDP context activation (i.e., address is sent by the Network in an Activate PDP Context Accept) for a successful PDP context activation procedure when the PDP Context activation request does not contain a static PDP address.** |
| | | **- address offered by the network in association with a network-initiated PDP context activation request when the intercept subject's MS accepts the network-initiated PDP context activation request.** |
| **event type** | **C** | **Provide Start Of Interception With PDP Context Active event type.** |
| **event date** | **M** | **Provide the date and time the event is detected.** |
| **event time** | | |
| **access point name** | **C** | **Provide to identity the:** |
| | | **- packet data network to which the intercept subject requested to be connected when the intercept subject's MS is successful at performing a PDP context activation procedure (MS to Network).** |
| | | **- access point of the packet data network that requested to be connected to the MS when the intercept subjects MS accepts a network-initiated PDP context activation (Network to MS).** |
| **PDP type** | **C** | **Provide to describe the PDP type of the observed PDP address. The PDP Type defines the end user protocol to be used between the external packet data network and the MS.** |
| **initiator** | **C** | **Provide to indicate whether the PDP context activation is network-initiated, intercept-subject-initiated, or not available.** |
| **network identifier** | **M** | **Shall be provided.** |
| **correlation number** | **C** | **Provide to uniquely identify the PDP context delivered to the LEMF and to correlate IRI records with CC.** |
| **lawful intercept identifier** | **M** | **Shall be provided.** |
| **location information** | **C** | **Provide, when authorized, to identify location information for the intercept subject's MS.** |
| **QOS** | **C** | **Provide to identify the QOS parameters.** |

### 6.5.1.3 CONTINUE record information

The CONTINUE record is used to convey events during an active packet-data communication PDP Context.

The CONTINUE record shall be triggered when:
- An active PDP context is modified;

**Table 6.11: PDP Context Modification CONTINUE Record**

| **Parameter** | **MOC** | **Description/Conditions** |
|---|---|---|
| **observed MSISDN** | | |
| **observed IMSI** | **C** | **Provide at least one and others when available.** |
| **observed IMEI** | | |
| **observed PDP address** | **C** | **The observed address after modification Provide to identify the:** |
| | | **- static address requested by the intercept subject's MS, and allocated by the Network for a successful PDP context activation.** |
| | | **- address allocated dynamically by the network to the intercept subject MS in association with a PDP context activation (i.e., address is sent by the Network in an Activate PDP Context Accept) for a successful PDP context activation procedure when the PDP Context activation request does not contain a static PDP address.** |
| | | **- address offered by the network in association with a network-initiated PDP context activation request when the intercept subjects MS accepts the network-initiated PDP context activation request** |
| **event type** | **C** | **Provide the PDP Context Modification event type.** |
| **event date** | **M** | **Provide the date and time the event is detected.** |
| **event time** | | |
| **access point name** | **C** | **Provide to identify the:** |
| | | **- packet data network to which the intercept subject requested to be connected when the intercept subject's MS is successful at performing a PDP context activation procedure (MS to Network).** |
| | | **- access point of the packet data network that requested to be connected to the MS when the intercept subject's MS accepts a network-initiated PDP context activation (Network to MS).** |
| **PDP type** | **C** | **Provide to describe the PDP type of the observed PDP address. The PDP Type defines the end user protocol to be used between the external packet data network and the MS.** |
| **initiator** | **C** | **Provide to indicate whether the PDP context activation is network-initiated, intercept-subject-initiated, or not available.** |
| **network identifier** | **M** | **Shall be provided.** |
| **correlation number** | **C** | **Provide to uniquely identify the PDP context delivered to the LEMF used to correlate IRI records with CC.** |
| **lawful intercept identifier** | **M** | **Shall be provided.** |
| **location information** | **C** | **Provide, when authorized, to identify location information for the intercept subject's MS.** |
| **QOS** | **C** | **Provide to identify the QOS parameters.** |
| **serving SGSN RAI** | **C** | **Provided only by the old SGSN, when the alternative serving** |
| | | **system reporting is supported, and if the new SGSN sends the** |
| | | **Identification Request to it.** |
| **serving SGSN number** | **C** | **Provided only by the old SGSN, when the alternative serving** |
| | | **system reporting is supported, and if the new SGSN sends the** |
| | | **Identification Request to it** |

### 6.5.1.4 END record information

The END record is used to convey the last event of packet-data communication interception.

The END record shall be triggered when:
- PDP context deactivation.

**Table 6.12: PDP Context Deactivation END Record**

| **Parameter** | **MOC** | **Description/Conditions** |
|---|---|---|
| **observed MSISDN** | | |
| **observed IMSI** | **C** | **Provide at least one and others when available.** |
| **observed IMEI** | | |
| **observed PDP address** | **C** | **Provide to identify the PDP address assigned to the intercept subject, if available.** |
| **event type** | **C** | **Provide PDP Context Deactivation event type.** |
| **event date** | **M** | **Provide the date and time the event is detected.** |
| **event time** | | |
| **access point name** | **C** | **Provide to identify the packet data network to which the intercept subject is connected.** |
| **PDP type** | **C** | **Provide to describe the PDP type of the observed PDP address. The PDP Type defines the end user protocol to be used between the external packet data network and the MS.** |
| **initiator** | **C** | **Provide to indicate whether the PDP context deactivation is network-initiated, intercept-subject-initiated, or not available.** |
| **network identifier** | **M** | **Shall be provided.** |
| **correlation number** | **C** | **Provide to uniquely identify the PDP context delivered to the LEM and to correlate IRI records with CC.** |
| **lawful intercept identifier** | **M** | **Shall be provided.** |
| **location information** | **C** | **Provide, when authorized, to identify location information for the intercept subject's MS.** |
| **context deactivation reason** | **C** | **Provide to indicate reason for deactivation.** |

### 6.6 IRI reporting for packet domain at GGSN

As a national option, in the case where the GGSN is reporting IRI for an intercept subject, the intercept subject is handed off to another SGSN and the same GGSN continues to handle the content of communications subject to roaming agreements, the GGSN shall continue to report the following IRI of the content of communication:
- PDP context activation;
- PDP context deactivation;
- Start of interception with PDP context active;
- PDP context modification.

### 6.7 Content of communication interception for packet domain at GGSN

As a national option, in the case where the GGSN is performing interception of the content of communications, the intercept subject is handed off to another SGSN and the same GGSN continues to handle the content of communications subject to roaming agreements, the GGSN shall continue to perform the interception of the content of communication. 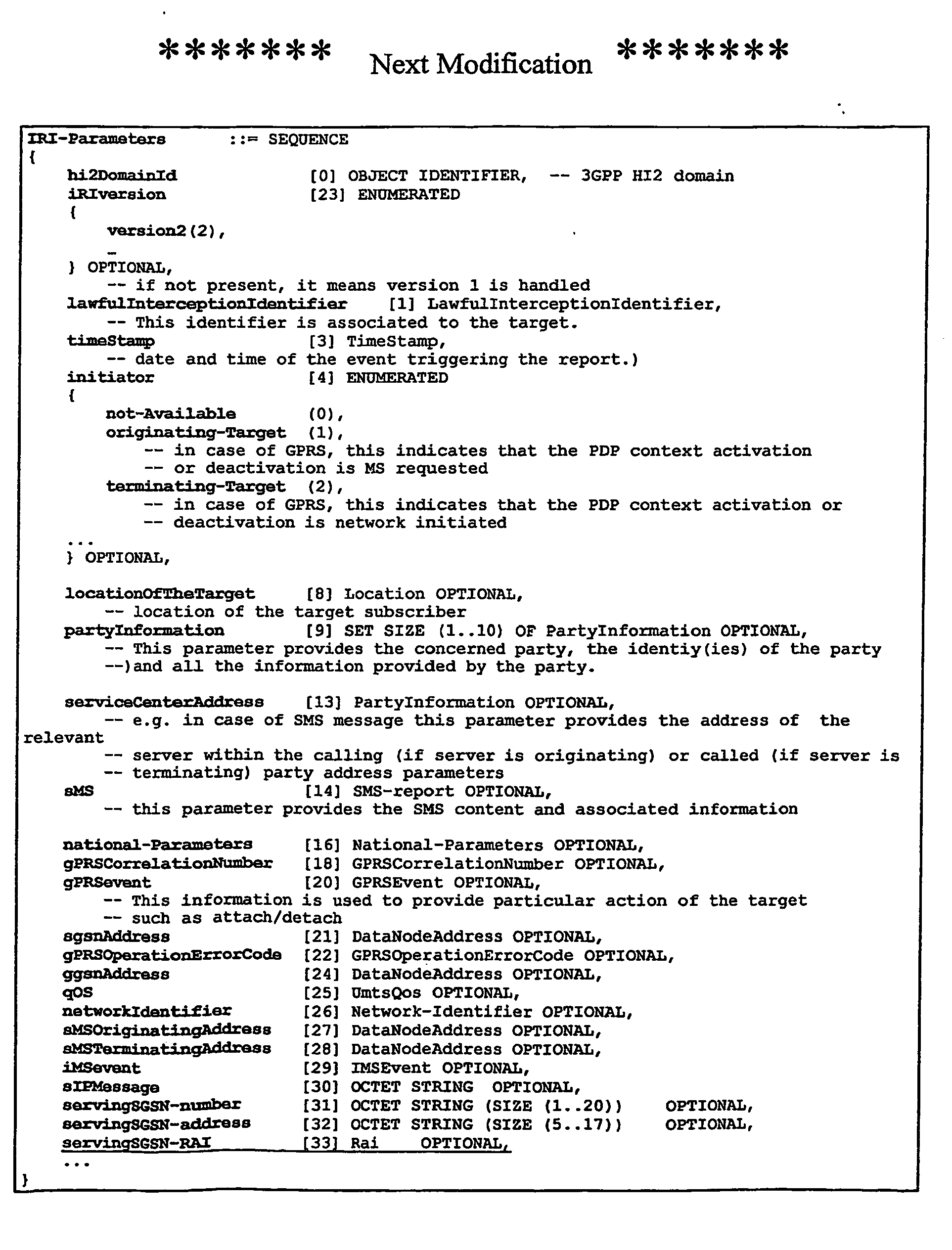 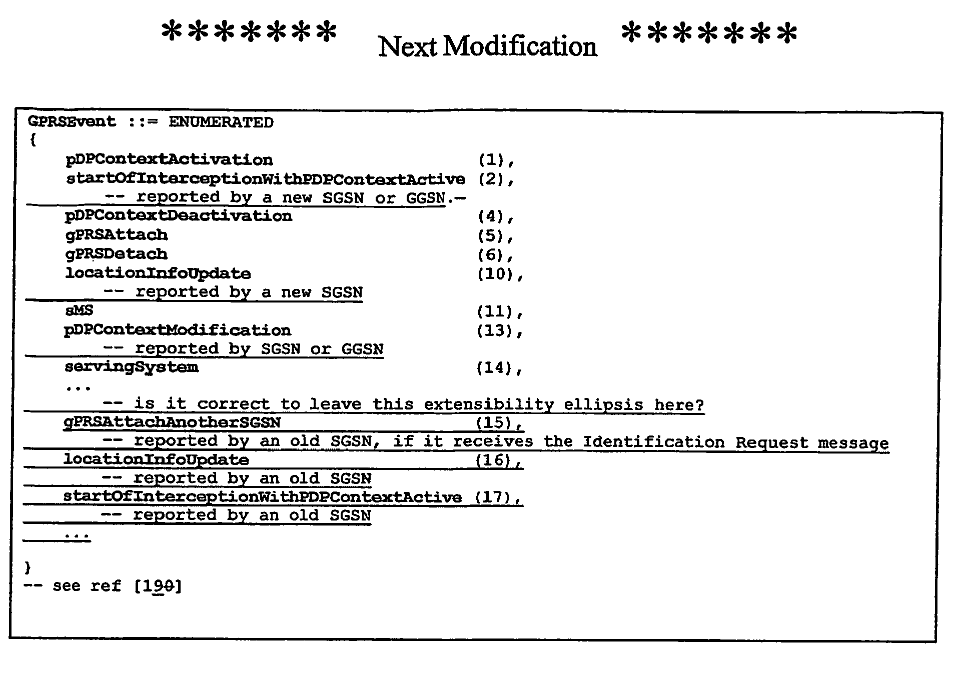 and

### B) As to 3GPP TS 33.107 V5.3.0 (2002-06):

### ******* Next Modification *******

### 7.3.2 Structure of the events

There are eight different events in which the information is sent to the DF2 if this is required. Details are described in the following section. The events for interception are configurable (if they are sent to DF2) in the 3G GSN or the HLR and can be suppressed in the DF2.

**The following events are applicable to 3G SGSN:**
- Mobile Station Attach;
- Mobile Station Detach;
- PDP context activation;
- Start of intercept with PDP context active;
- PDP context modification;
- PDP context deactivation;
- RA update;
- SMS.
   NOTE: 3G GGSN interception is a national option. Location information may not be available in this case.

**The following events are applicable to the 3G GGSN:**
- PDP context activation;
- PDP context modification;
- PDP context deactivation;
- Start of interception with PDP context active.

**The following events are applicable to the HLR:**
- Roaming.

A set of fields as shown below is used to generate the events. The events transmit the information from 3G GSN or HLR to DF2. This set of fields as shown below can be extended in the 3G GSN or HLR, if this is necessary as a national option. DF2 can extend this information if this is necessary as a national option e.g. a unique number for each surveillance warrant.

**Table 2: Information Events for Packet Data Event Records**

| |
|---|
| **Observed MSISDN** |
| **MSISDN of the target subscriber (monitored subscriber).** |
| **Observed IMSI** |
| **IMSI of the target subscriber (monitored subscriber).** |
| **Observed IMEI** |
| **IMEI of the target subscriber (monitored subscriber),it shall be checked for each activation over the radio interface.** |
| **Event type** |
| **Description which type of event is delivered: MS attach, MS detach, PDP context activation, Start of intercept with PDP context active, PDP context deactivation, SMS, Serving System, Cell and/or RA update from new** |
| **SGSN, Cell and/or RA update from old SGSN, PDP context modification from new SGSN, PDP contextmodification from GGSN.** |
| **Event date** |
| **Date of the event generation in the 3G GSN or the HLR.** |
| **Event time** |
| **Time of the event generation in the 3G GSN or the HLR.** |
| **PDP address** |
| **The PDP address of the target subscriber. Note that this address might be dynamic.** |
| **Access Point Name** |
| **The APN of the access point. (Typically the GGSN of the other party).** |
| **Location information** |
| **Location Information is the Service Area identity (SAI), RAI and/or location area identity that is present at the GSN at the time of event record production.** |
| **PDP Type** |
| **The used PDP type.** |
| **Correlation Number** |
| **The -correlation number is used to correlate CC and IRI.** |
| **SMS** |
| **The SMS content with header which is sent with the SMS-service. The header also includes the SMS-Centre address.** |
| **Network Element Identifier. Unique identifier for the element reporting the ICE.** |
| **Failed attach reason** |
| **Reason for failed attach of the target subscriber.** |
| **Failed context activation reason** |
| **Reason for failed context activation of the target subscriber.** |
| **IAs** |
| **The observed Interception Areas.** |
| **Session Initiator** |
| **The initiator of the PDP context activation, deactivation or modification request either the network or the 3G MS.** |
| **Initiator** |
| **SMS indicator whether the SMS is MO or MT.** |
| **Deactivation I termination cause** |
| **The termination cause of the PDP context.** |
| **QoS** |
| **This field indicates the Quality of Service associated with the PDP Context procedure.** |
| **Serving System Address** |
| **Information about the serving system (e.g. serving SGSN MSISDN number, serving SGSN RAI or serving SGSN address).** |

### ******* Next Modification *******

### 7.4.1 Mobile Station Attach

For attach an attach-event is generated. When an attach activation is generated from the mobile to servicing 3G SG-SN this event is generated. These fields will be delivered to the DF2 if available:

| |
|---|
| **Observed MSISDN** |
| **Observed IMSI** |
| **Observed IMEI** |
| **Event Type** |
| **Event Time** |
| **Event Date** |
| **Network Element Identifier** |
| **Location Information** |
| **Failed attach reason** |
| **IAs (if applicable)** |

In case the alternative serving system reporting is supported, and if the new SGSN sends the Identification Request to the old SGSN, then the old SGSN should deliver the following fields to the DF2:

| |
|---|
| **Observed MSISDN** |
| **Observed IMSI** |
| **Observed IMEI** |
| **Event Type** |
| **Event Time** |
| **Event Date** |
| **Network Element Identifier** |
| **Location Information** |
| **New SGSN's RAI** |

### ******* Next Modification *******

### 7.4.6 RA update

For each RA update an update-event with the fields about the new location is generated. These fields shall be delivered by new SGSN to the DF2 if available:

| |
|---|
| **Observed MSISDN** |
| **Observed IMSI** |
| **Observed IMEI** |
| **Event Type** |
| **Event Time** |
| **Event Date** |
| **Network Element Identifier** |
| **Location Information** |
| **IAs (if applicable)** |

These fields may be delivered by old SGSN to the DF2 if available:

| |
|---|
| **Observed MSISDN** |
| **Observed IMSI** |
| **Observed IMEI** |
| **Event Type** |
| **Event Time** |
| **Event Date** |
| **Network Element Identifier** |
| **Location Information** |
| **IAs (if applicable)** |
| **New SGSN's Serving System Address** |

### ******* Next Modification *******

### 7.4.8 Packet Data PDP context modification

This event shall be generated if interception for a target is started and if the target has at least one PDP context active. These fields shall be delivered by new SGSN to the DF2 if available:

| |
|---|
| **Observed MSISDN** |
| **Observed IMSI** |
| **Observed IMEI** |
| **PDP address of observed party** |
| **Event Type** |
| **Event Time** |
| **Event Date** |
| **Correlation number** |
| **Access Point Name** |
| **PDP Type** |
| **Network Element Identifier** |
| **Location Information** |
| **IAs (if applicable)** |
| **Session Initiator** |
| **QoS** |

These fields may be delivered by GGSN to the DF2 if available:

| |
|---|
| **Observed MSISDN** |
| **Observed IMSI** |
| **PDP address of observed party** |
| **Event Type** |
| **Event Time** |
| **Event Date** |
| **Correlation number** |
| **Access Point Name** |
| **PDP Type** |
| **Network Element Identifier** |
| **Session Initiator** |
| **QoS** |
| **New SGSN's Serving System Address** |

### 7.4.9 Serving System

In case the network does not support alternative serving system reporting, the Serving System report event is generated at the HLR, when the HLR has detected that the intercept subject has roamed. The fields will be delivered to the DF2 if available:

| |
|---|
| **Observed MSISDN** |
| **Observed IMSI** |
| |
| **Event Type** |
| **Event Time** |
| **Event Date** |
| **Network Element Identifier** |
| **Serving System Address** |

When the network supports the alternative serving system reporting, the following events shall be generated:
- RA Update by old SGSN (in addition to the RA Update by new SGSN)
- Packet Data PDP context modification by GGSN (in addition to the Packet Data PDP context modification by new SGSN)
- Attach from the old SGSN in case the alternative serving system reporting is supported, and if the new SGSN sends the Identification Request to the old SGSN
In order to support the alternative serving system reporting, new SGSN should put its own RAI and /or MSISDN number into the Private Extension IE of the following GTP-C messages:
- SGSN Context Request, sent to the old SGSN
- Update PDP context Request, sent to GGSN
   Formats of the RAI and MSISDN number are e.g. defined in the GTP specification [7].

While the invention has been described with reference to a preferred embodiment, the description is illustrative of the invention and is not to be construed as limiting the invention. Various modifications and applications may occur to those skilled in the art without departing from the scope of the invention as defined by the appended claims.

## Claims

1. A method for informing a lawful interception system
of a serving system serving an intercepted target (MS) roaming within a communication network system, the communication network system comprising at least one serving system, each serving system comprising at least one serving system node (SGSN) serving the intercepted target for communication,
the method comprising the steps of:
detecting at a new serving system node a serving system node change request from the intercepted target (MS) towards the new serving system node which is currently not serving the target,
processing said serving system node change request at said new serving system node currently not serving the target, wherein said processing comprises the inclusion, to the request, of a serving system address of the new serving system node currently not serving the target, and
forwarding said processed request to an old serving system node currently serving the target.

2. A method according to claim 1, wherein
said old serving system node currently serving the target informs the interception system of the serving system address of the new serving system node.

3. A method according to claim 1, further comprising the method steps of
detecting at least one active communication context for said target, and in response thereto,
generating a communication context update request to which is included the serving system address of the new serving system node currently not serving the target, and
forwarding said generated request to a gateway serving system node (GGSN) of the serving system currently serving the intercepted target.

4. A method according to claim 3, wherein
said gateway serving system node (GGSN) informs the interception system of the serving system address of the new serving system node.

5. A method according to claim 1, 2, 3, or 4, wherein
said serving system address of the new serving system node represents information about the serving system to which said new serving node belongs.

6. A method according to claim 5, wherein
said information about the serving system to which said new serving node belongs comprises at least one of the following information items: serving node MSISDN number, serving node routing area identifier, serving node address.

7. A method according to claim 6, wherein
said serving node routing area identifier contains information items representative of a mobile country code MCC, mobile network code MNC, location area code LAC, and routing area code RAC.

8. A serving system node of a serving system, the serving system node being adapted to serve an intercepted target (MS) for communication, and being connectable to a lawful interception system, the serving system node comprising:
detection means adapted for detecting a serving system node change request from the intercepted target (MS),
processing means adapted for processing said serving system node change request, wherein said processing is adapted to include, to the request, a serving system address of the serving system node, and
forwarding means adapted for forwarding said processed request to another serving system node currently serving the target.

9. A serving system node according to claim 8, comprising
informing means adapted to inform the interception system of the serving system address of a new serving system node, said informing means being active in case said serving system node is currently serving the target.

10. A serving system node according to claim 8, further comprising
detection means adapted for detecting at least one active communication context for said target, and
generation means, controlled by said second detection means, and adapted for generating a communication context update request to which is included the serving system address of the serving system node, and
forwarding means adapted for forwarding said generated request to a gateway serving system node (GGSN) of the serving system currently serving the intercepted target.

11. A serving system node according to claim 8, 9, or 10, wherein
said serving system address of the serving system node represents information about the serving system to which said new serving node belongs.

12. A serving system node according to claim 11, wherein
said information about the serving system to which said serving node belongs comprises at least one of the following information items: serving node MSISDN number, serving node routing area identifier, serving node address.

13. A serving system node according to claim 12, wherein
said serving node routing area identifier contains information items representative of a mobile country code MCC, mobile network code MNC, location area code LAC, and routing area code RAC.

## Patentansprüche

1. Verfahren zum Informieren eines gesetzlichen Abfangsystems über ein Bediensystem, das ein abgefangenes Ziel (MS) bedient, welches in einem Kommunikationsnetzwerksystem umherwandert, wobei das Kommunikationsnetzwerksystem zumindest ein Bediensystem aufweist, wobei jedes Bediensystem zumindest einen Bediensystemknoten (SGSN) aufweist, der dem abgefangenen Ziel zur Kommunikation dient, wobei das Verfahren die Schritte aufweist:
Erfassen von einer Bediensystemknoten-Änderungsanforderung von dem abgefangenen Ziel (MS) in Richtung eines neuen Bediensystemknotens, der das Ziel momentan nicht bedient, an dem neuen Bediensystemknoten,
Verarbeiten der Bediensystemknoten-Änderungsanforderung an dem neuen Bediensystemknoten, der das Ziel momentan nicht bedient, wobei die Verarbeitung die Einfügung einer Bediensystemadresse des neuen Bediensystemknotens, der das Ziel momentan nicht bedient, in die Anforderung aufweist, und
Weiterleiten der verarbeiteten Anforderung an einen alten Bediensystemknoten, der das Ziel momentan bedient.

2. Verfahren gemäß Anspruch 1, bei dem der alte Bediensystemknoten, der das Ziel momentan bedient, das Abfangsystem über die Bediensystemadresse des neuen Bediensystemknotens informiert.

3. Verfahren gemäß Anspruch 1, zusätzlich mit den Verfahrensschritten:
Erfassen von zumindest einem aktiven Kommunikationskontext für das Ziel, und in Erwiderung darauf:
Erzeugen einer Kommunikationskontext-Aktualisierungsanforderung, in die die Bediensystemadresse des neuen Bediensystemknotens, der das Ziel momentan nicht bedient, eingefügt ist, und
Weiterleiten der erzeugten Anforderung an einen Gateway-Bediensystemknoten (GGSN) des Bediensystems, das das abgefangene Ziel momentan bedient.

4. Verfahren gemäß Anspruch 3, bei dem der Gateway-Bediensystemknoten (GGSN) das Abfangsystem über die Bediensystemadresse des neuen Bediensystemknotens informiert.

5. Verfahren gemäß Anspruch 1, 2, 3 oder 4, bei dem die Bediensystemadresse des neuen Bediensystemknotens Informationen über das Bediensystem darstellt, zu dem der neue Bedienknoten gehört.

6. Verfahren gemäß Anspruch 5, bei dem die Informationen über das Bediensystem, zu dem der neue Bedienknoten gehört, zumindest eines der folgenden Informationselemente aufweisen: Bedienknoten-MSISDN-Nummer, Bedienknoten-Leitweglenkungsbereichsbezeichner, Bedienknotenadresse.

7. Verfahren gemäß Anspruch 6, bei dem der Bedienknoten-Leitweglenkungsbereichsbezeichner Informationselemente enthält, die für einen Mobilfunkländercode MCC, einen Mobilfunknetzwerkcode MNC, einen Aufenthaltsbereichscode LAC und einen Leitweglenkungsbereichscode RAC bezeichnend sind.

8. Bediensystemknoten eines Bediensystems, wobei der Bediensystemknoten angepasst ist, einem abgefangenen Ziel (MS) zur Kommunikation zu dienen, und mit einem gesetzlichen Abfangsystem verbindbar ist, wobei der Bediensystemknoten aufweist:
eine Erfassungseinrichtung, die angepasst ist zum Erfassen von einer Bediensystemknoten-Änderungsanforderung von dem abgefangenen Ziel (MS),
eine Verarbeitungseinrichtung, die angepasst ist zum Verarbeiten der Bediensystemknoten-Änderungsanforderung, wobei die Verarbeitung angepasst ist, in die Anforderung eine Bediensystemadresse des Bediensystemknotens einzufügen, und
eine Weiterleitungseinrichtung, die angepasst ist zum Weiterleiten der verarbeiteten Anforderung an einen anderen Bediensystemknoten, der das Ziel momentan bedient.

9. Bediensystemknoten gemäß Anspruch 8, mit:
einer Informationseinrichtung, die angepasst ist zum Informieren des Abfangsystems über die Bediensystemadresse eines neuen Bediensystemknotens, wobei die Informationseinrichtung aktiv ist, wenn der Bediensystemknoten das Ziel momentan bedient.

10. Bediensystemknoten gemäß Anspruch 8, zusätzlich mit:
einer Erfassungseinrichtung, die angepasst ist zum Erfassen von zumindest einem aktiven Kommunikationskontext für das Ziel, und
einer Erzeugungseinrichtung, die von der zweiten Erfassungseinrichtung gesteuert wird und angepasst ist zum Erzeugen einer Kommunikationskontext-Aktualisierungsanforderung, in die die Bediensystemadresse des Bediensystemknotens eingefügt wird, und
einer Weiterleitungseinrichtung, die angepasst ist zum Weiterleiten der erzeugten Anforderung an einen Gateway-Bediensystemknoten (GGSN) des Bediensystems, das das abgefangene Ziel momentan bedient.

11. Bediensystemknoten gemäß Anspruch 8, 9 oder 10, bei dem die Bediensystemadresse des Bediensystemknotens Informationen über das Bediensystem darstellt, zu dem der neue Bedienknoten gehört.

12. Bediensystemknoten gemäß Anspruch 11, bei dem die Informationen über das Bediensystem, zu dem der Bedienknoten gehört, zumindest eines der folgenden Informationselemente aufweisen: Bedienknoten-MSISDN-Nummer, Bedienknoten-Leitweglenkungsbereichsbezeichner, Bedienknotenadresse.

13. Bediensystemknoten gemäß Anspruch 12, bei dem der Bedienknoten-Leitweglenkungsbereichsbezeichner Informationselemente enthält, die für einen Mobilfunkländercode MCC, einen Mobilfunknetzwerkcode MNC, einen Aufenthaltsbereichscode LAC und einen Leitweglenkungsbereichscode RAC bezeichnend sind.

## Revendications

1. Procédé permettant d'informer un système légal d'interception d'un système servant, servant une cible interceptée (station mobile MS) se déplaçant dans un système de réseau de transmissions, le système de réseau de transmissions comprenant au moins un système servant, chaque système servant comprenant au moins un noeud servant de système (SGSN) servant la cible interceptée pour la transmission,
le procédé comprenant les étapes consistant à:
détecter à un nouveau noeud de système servant une requête de modification de noeud de système servant à partir de la cible interceptée (station mobile MS) vers le nouveau noeud de système servant qui actuellement ne sert pas la cible,
traiter ladite requête de modification de noeud de système servant audit nouveau noeud de système servant actuellement ne servant pas la cible, dans lequel ledit traitement comprend l'inclusion à la requête, d'une adresse de système servant du nouveau noeud de système servant ne servant actuellement pas la cible, et
transférer ladite requête traitée à un ancien noeud de système servant, servant actuellement la cible.

2. Procédé selon la revendication 1, dans lequel
ledit ancien noeud de système servant servant actuellement la cible informe le système d'interception de l'adresse de système servant du nouveau noeud de système servant.

3. Procédé selon la revendication 1, comportant en outre les étapes consistant à
détecter au moins un contexte actif de transmission pour ladite cible, et en réponse,
générer une requête de mise à jour du contexte de transmission à laquelle est incluse l'adresse de système servant du nouveau noeud de système servant ne servant pas la cible actuellement, et
transférer ladite requête générée à un noeud de système servant de passerelle (GGSN) du système servant servant actuellement la cible interceptée.

4. Procédé selon la revendication 3, dans lequel
ledit noeud de système servant de passerelle (GGSN) informe le système d'interception de l'adresse du système servant du nouveau noeud de système servant.

5. Procédé selon la revendication 1, 2, 3, ou 4, dans lequel
ladite adresse de système servant du nouveau noeud de système servant représente des informations relatives au système servant auquel ledit nouveau noeud servant appartient.

6. Procédé selon la revendication 5, dans lequel
lesdites informations relatives au système servant auquel ledit nouveau noeud servant appartient comprend au moins un des éléments suivants d'informations : un numéro du noeud MSISDN servant, un identificateur de zone d'acheminement du noeud servant, une adresse du noeud servant.

7. Procédé selon la revendication 6, dans lequel
ledit identificateur de zone d'acheminement de noeud servant contient des éléments d'informations représentatifs d'un code MCC de pays de mobiles, d'un code MNC de réseau de mobiles, d'un code LAC de zone d'emplacement, et d'un code RAC de zone d'acheminement.

8. Noeud de système servant d'un système servant, le noeud de système servant étant adapté pour servir une cible interceptée (station mobile MS) de transmission, et étant connectable à un système légal d'interception, le noeud de système servant comprenant :
des moyens de détection adaptés pour détecter une requête de modification d'un noeud du système servant à partir de la cible interceptée (station mobile MS),
des moyens de traitement adaptés pour traiter ladite requête de modification du noeud de système servant, dans lesquels ledit traitement est adapté pour inclure, à la requête, une adresse de système servant de noeud de système servant, et
des moyens de transfert adaptés permettant de retransmettre ladite requête traitée à un autre noeud de système servant servant actuellement la cible.

9. Noeud de système servant selon la revendication 8, comprenant
des moyens d'information adaptés pour informer le système d'interception de l'adresse du système servant d'un nouveau noeud de système servant, lesdits moyens d'information étant actifs au cas où ledit noeud de système servant servirait actuellement la cible.

10. Noeud de système servant selon la revendication 8, comportant en outre
des moyens de détection adaptés pour détecter au moins un contexte actif de transmission pour ladite cible, et
des moyens de génération, commandés par lesdits deuxièmes moyens de détection, et adaptés pour générer une requête de mise à jour de contexte de transmission dans laquelle est incluse l'adresse du système servant du noeud de système servant, et
des moyens de transfert adaptés pour permettre de retransmettre ladite requête générée à un noeud de système servant de passerelle (GGSN) du système servant servant actuellement la cible interceptée.

11. Noeud de système servant selon la revendication 8, 9, ou 10, dans lequel
ladite adresse de système servant du noeud de système servant représente des informations relatives au système servant auquel ledit nouveau noeud servant appartient.

12. Noeud de système servant selon la revendication 11, dans lequel
lesdites informations relatives au système servant auquel ledit noeud servant appartient comprend au moins un des éléments d'informations suivants : un numéro du noeud servant MSISDN, un identificateur de zone d'acheminement de noeud servant, une adresse de noeud servant.

13. Noeud de système servant selon la revendication 12, dans lequel
ledit identificateur de zone d'acheminement de noeud servant contient des éléments d'informations représentatifs d'un code MCC de pays de mobiles, d'un code MNC de réseau de mobiles, d'un code LAC de la zone d'emplacement, et d'un code RAC de la zone d'acheminement.
